# EUROPEAN PATENT APPLICATION

(11) **EP 2 631 992 A1**
(43) Date of publication of application: **28.08.2013**
(21) Application number: 11834124.7
(22) Date of filing: 18.08.2011
(51) Int. Cl.: H01Q 9/30, H01Q 1/24, H01Q 5/01

(54) **ANTENNA DEVICE**

(30) Priority: 21.10.2010 JP 2010236601
(71) Applicant: NEC Access Technica, Ltd., Shizuoka 436-8501 (JP); NEC CASIO Mobile Communications, Ltd., Kawasaki-shi Kanagawa 211-0011 (JP)
(72) Inventor: UCHIDA, Jun, Kakegawa-shi Shizuoka 436-8501 (JP)
(74) Representative: Vossius & Partner
(86) International application number: PCT/JP2011/069095
(87) International publication number: WO 2012/053282

(57) **Abstract**

It is characterized in that it includes; a single antenna element corresponding to a first frequency band and a second frequency band that is different from the first frequency band; a power feeding point for supplying AC power to the antenna element; and a parallel resonance circuit electrically connected between the antenna element and the power feeding point, and the parallel resonance circuit has impedance that is set so as to indicate induction properties in the first second frequency band and set so as to indicate capacitance properties in the second frequency band, and return loss in the first and second frequency bands is sufficiently small so as to enable wireless communication.

## Description

### Field

The present invention relates to an antenna device covering a wide range frequency band with a small number of antenna elements.

### Background

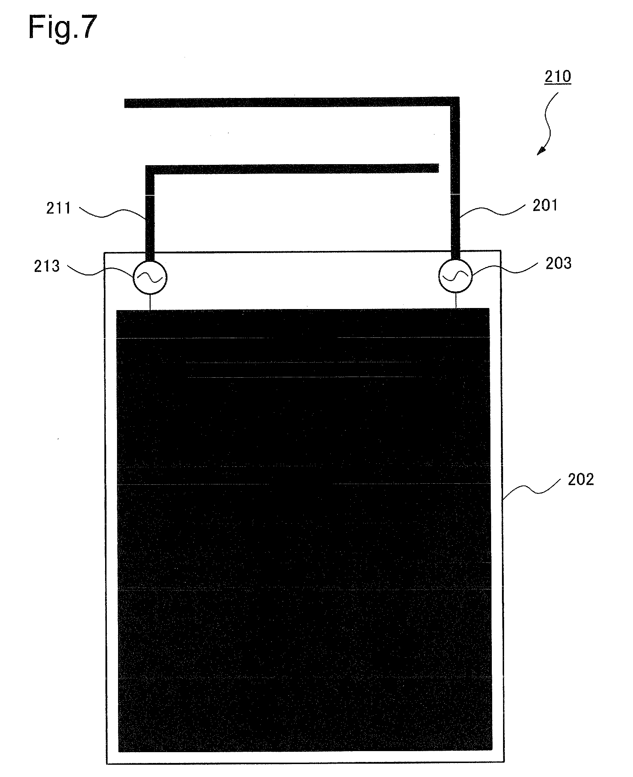

Conventionally, an antenna device having two antenna elements is adopted so as to correspond to different radio frequency bands, respectively. As such an antenna device 210, Fig. 7 shows an antenna device 210 including two antenna elements 201 and 211 for a low frequency band and for a high frequency band on a printed wiring board 202 with two power feeding points 203 and 213. In the antenna device 210, the antenna element 201 for the low frequency band is set so as to correspond to a frequency band of 1100 to 1200 MHz, and other antenna element 211 for the high frequency band is set so as to correspond to a frequency band of 1700 to 1800 MHz, for example. Thus, in the related technology shown in Fig. 7, in order to get antenna characteristics required to wireless communication, the antenna device 210 installs two antenna elements (here, referred to as a hot side antenna element) 201 and 211 corresponding to each frequency band, respectively.

In recent years, a wireless communication terminal of a cellular phone, a router and a personal computer having an antenna device evolves every day, and a consumer ask for the wireless communication terminal convenient to carry which is rich in functionality. In order to respond to the consumer's needs, a producer is performing a research and development to miniaturize members used for the wireless communication terminal more, maintaining multifunctionality of the wireless communication terminal. Under such circumstances, in the related technology shown in Fig. 7, it is in the situation which is going to near a limit to miniaturize the member itself of the antenna device. And difficulty follows on reconciling maintenance of the present functionality and the miniaturization of the antenna device. Accordingly, because a remarkable miniaturization of a wireless communication terminal having the antenna device can be realized when there is a technology which can still realize the multifunctionality even if the number of the member utilized for the antenna device is reduced, it is very effective.

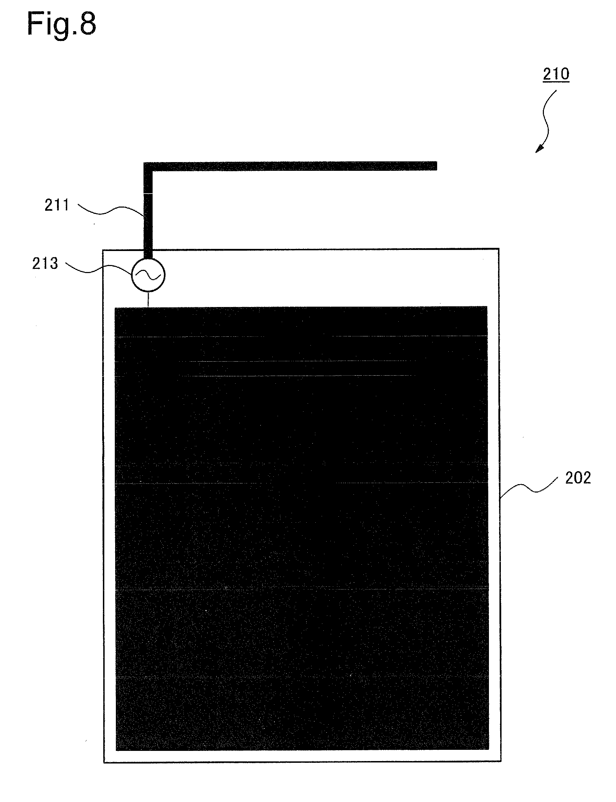

However, in the antenna device for example, if the number of two antenna elements is reduced to one, it can correspond only to one frequency band. In other words, the functionality of the wireless communication terminal having the antenna device will fall. As an example, an antenna device 210 having one antenna element 211 is shown in Fig. 8. The illustrated antenna device has one power feeding point connected to the antenna element electrically, and it is supposed here that it is set so as to correspond to a frequency band of 1700-1800 MHz like Fig. 7. Because other members are the same as that of the construction of the antenna device described in Fig. 7, the explanation thereof is omitted.

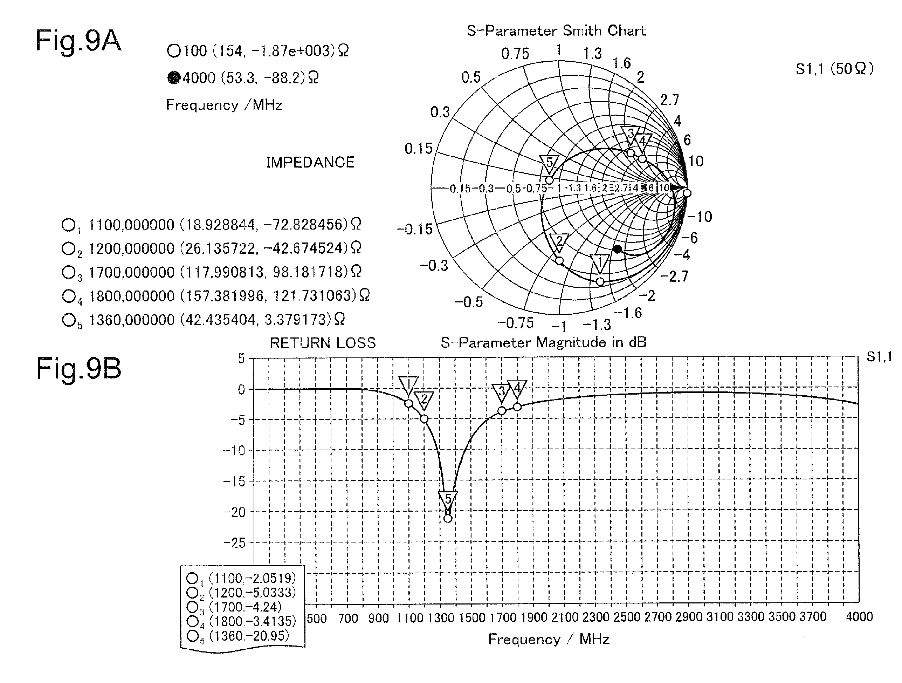

Fig. 9A shows impedance characteristic of the antenna device shown in Fig. 8, and Fig. 9B shows return loss characteristic of the antenna device shown in Fig. 8. This is a measuring result of a frequency characteristic of electric power in a power feeding point using a network analyzer as a measuring instrument, and it can be judged by using the measuring result that the antenna characteristic of the antenna device is good or not. Markers 1, 2, 3, 4 and 5 in Fig. 9A and Fig. 9B are impedance characteristics and return losses at 1100, 1200, 1700, 1800 and 1360 MHz, respectively. In particular, the marker 5 shows the resonance center frequency of this antenna element. The return loss shown in Fig. 9B is obtained by the same measurement as the impedance in Fig. 9A, the charts are only different therebetween. Referring to Fig. 9B, it is found that securement of the return loss is made sufficiently in the resonance center frequency 1360 MHz of this antenna device. However, in the low frequency band of 1100 to 1200 MHz which should correspond, and the low frequency band of 1100 MHz especially shown with the marker 1, the return loss is -2 dB and very bad value. On the other hand, in the high frequency band of 1700 to 1800 MHz which should correspond, the return losses are -4.2 and-3.4 dB, these are not desirable values for wireless communication.

In the antenna device having such return loss characteristics, because enough antenna characteristics by which wireless communication becomes possible is not obtained in the above-mentioned frequency band which should correspond, usually the system which uses two antenna elements of the hot side as shown in Fig. 7 is used. That is, in order to secure antenna characteristics, even if a method that just the number of the member of the antenna element is reduced and the size of the antenna device is miniaturized, is adopted like the antenna device described in Fig. 8, enough antenna characteristics cannot be obtained. A multi band antenna which can correspond to plural bands is disclosed in Japanese Patent

Application Laid-Open No. 2010-010960 as a prior art using a single antenna element (paragraph 0006). Specifically, an antenna which installs an LC parallel resonance circuit in the middle of an antenna element and makes the high frequency band side broader is disclosed in Japanese Patent Application Laid-Open No. 2010-010960, and it is specified that it is necessary to install the LC parallel resonance circuit of the antenna in a position which is λ/4 (λ: wavelength) of the high band side frequency away from the power feeding point. Therefore, when a single antenna element is used, it is suggested that the antenna cannot be miniaturized on the relation with the installation position of the LC parallel resonance circuit.

Accordingly, Japanese Patent Application Laid-Open No. 2010-010960 proposes a multi band antenna having two antenna elements. That is, an impedance matching circuit including an LC parallel resonance circuit is inserted and connected to one of the above-mentioned antenna elements. This multi band antenna can realize good broadband characteristics in the low frequency band side.

### [Summary]

### [Technical Problem]

However, although the above-mentioned Japanese Patent Application Laid-Open No. 2010-010960 aims at how improving the characteristics of the low frequency band side, maintaining the present two antenna elements, but an effective means to realize the miniaturization of the antenna device by reducing the number of the antenna elements is not described in particular. Therefore, two antenna elements are installed in the multi band antenna described in Japanese Patent Application Laid-Open No. 2010-010960. Thus, the above-mentioned Japanese Patent Application Laid-Open No. 2010-010960 cannot meet the needs of the customers asking for the wireless communication terminal by reducing the number of the antenna elements which is small and easy to carry, and there is a problem that cost reduction of the antenna device was not made eventually.

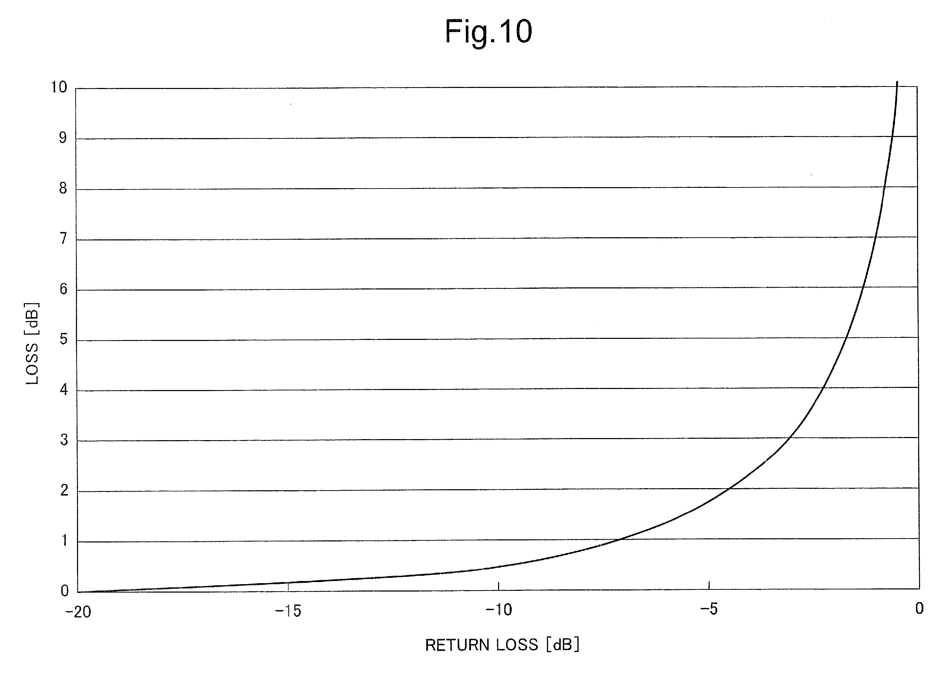

By the way, according to this inventor's study, it was revealed that an antenna device has a relation between a return loss and a matching loss of a wireless circuit as shown in Fig. 10. As it may be obvious from Fig. 10, it is found the matching loss of the antenna device increases rapidly when the return loss exceeds -5 dB. In other words, it is found that if the return loss could be suppressed below -5 dB, the antenna device can be miniaturized substantially, maintaining functionality thereof. In view of the above mentioned point, an exemplary embodiment of the present invention aims at providing a technology of an antenna device which can correspond to several different frequency bands by a single antenna element.

### [Solution to Problem]

In order to solve the problems mentioned above, one mode of the present invention relates to an antenna device including: a single antenna element corresponding to a first frequency band to be used and a second frequency band to be used different from the first frequency band; a power feeding point for supplying AC power to the antenna element; and a parallel resonance circuit connected electrically between the antenna element and the power feeding point, wherein the parallel resonance circuit has impedance that is set so as to indicate induction properties in the first frequency band, and is set so as to indicate capacitance properties in the second frequency band, and return loss in the first and second frequency bands is sufficiently small so as to enable wireless communication.

And other mode of the present invention relates to a frequency band setting method including an antenna device design method, the antenna device design method including: selecting a single antenna element corresponding to a first frequency band and a second frequency band different from the first frequency band; connecting electrically a parallel resonance circuit between the antenna element and a power feeding point for supplying AC power to the antenna element; setting impedance of the parallel resonance circuit so as to indicate induction properties in the first frequency band and so as to indicate capacitance properties in the second frequency band; and setting return loss in the first and second frequency bands to a range so as to enable wireless communication.

Another mode of the present invention relates to an electric appliance including an antenna device, the antenna device including: a single antenna element corresponding to a first frequency band and a second frequency band different from the first frequency band; a power feeding point for supplying AC power to the antenna element; and a parallel resonance circuit connected electrically between the antenna element and the power feeding point, wherein the parallel resonance circuit has impedance that is set so as to indicate induction properties in the first frequency band, and is set so as to indicate capacitance properties in the second frequency band, and return loss in the first and second frequency bands is sufficiently small so as to enable wireless communication.

### [Advantageous Effects of Invention]

According to the present invention, by connecting the parallel resonance circuit to the antenna element of the antenna device, even if the antenna element is single, by connecting a to an antenna element of an antenna device, technology of the antenna device which can correspond to several different frequency bands can be provided.

Further advantageous effects and exemplary embodiments of the present invention will be described in detail in the following using a description and drawings.

### [Brief Description of Drawings]

Fig. 1 is a top view showing a construction of an antenna device according to a first exemplary embodiment of the present invention.
Fig. 2A is a chart showing impedance characteristic of the antenna device according to the first exemplary embodiment of the present invention.
Fig. 2B is a chart showing return loss characteristic of the antenna device according to the first exemplary embodiment of the present invention.
Fig. 3 is a chart showing a parallel resonance circuit mounted on an antenna device according to the first exemplary embodiment of the present invention and impedance characteristic thereof.
Fig. 4 is a top view showing a construction of an antenna device according to a second exemplary embodiment of the present invention.
Fig. 5 is a chart showing a parallel resonance circuit mounted on an antenna device according to the second exemplary embodiment of the present invention and impedance characteristic thereof.
Fig. 6A is a chart showing impedance characteristic of the antenna device according to the second exemplary embodiment of the present invention.
Fig. 6B is a chart showing return loss characteristic of the antenna device according to the second exemplary embodiment of the present invention.
Fig. 7 is a top view showing a construction of an antenna device of a related technology of the present invention.
Fig. 8 is a top view showing a construction of an antenna device of a related technology of the present invention.
Fig. 9A is a chart showing impedance characteristic of the antenna device shown in Fig. 8.
Fig. 9B is a chart showing return loss characteristic of the antenna device shown in Fig. 8.
Fig. 10 is a chart showing matching loss of the antenna device shown in Fig. 8.

### Description of Embodiments

Hereinafter, an antenna device according to a preferred exemplary embodiment of the present invention will be described in detail with reference to accompanying drawings. However, the technical scope of the present invention is not construed as limiting in any way by exemplary embodiments described below.

### <First Embodiment>

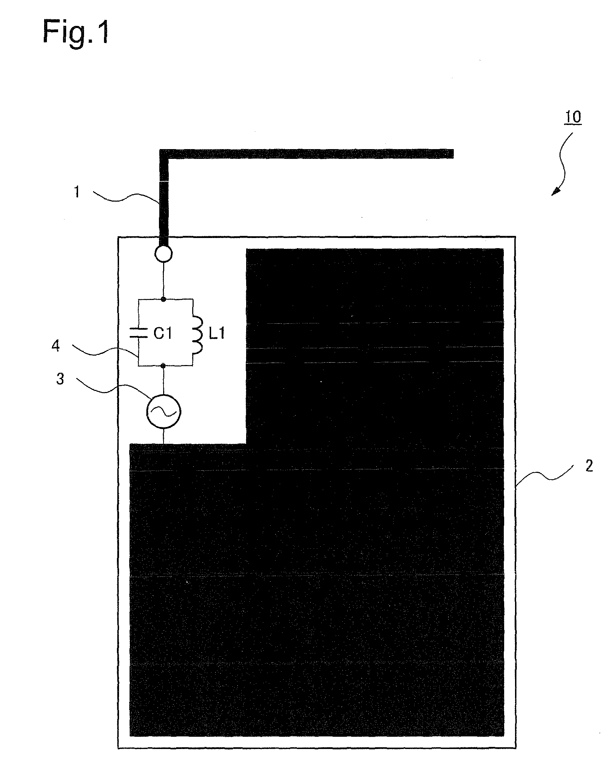

First, a first exemplary embodiment of the present invention will be described. Fig. 1 is a top view showing typically a schematic configuration of an antenna device 10 according to a first exemplary embodiment of the present invention. As shown in the figure, an antenna device 10 according to an exemplary embodiment of the present invention includes an antenna element 1, a printed wiring board 2, a power feeding point 3 and a parallel resonance circuit 4. It is supposed that the antenna device 10 according to this exemplary embodiment performs wireless communication with a base station, a wireless circuit or other wireless terminals in a low frequency band f1 and/or a high frequency band f3, and it is supposed that a parallel resonance frequency of the parallel resonance circuit 4 is a frequency f2 between the low frequency band f1 and the high frequency band f3.

Hereinafter, each component of which the antenna device 10 according to this exemplary embodiment is composed will be described in detail. For example, the antenna element 1 is a dipole antenna including a stick element. Moreover, the antenna element 1 can be formed of a conductive material such as a copper wire, an aluminum wire and an aluminum alloy wire. The frequency corresponding to the antenna element 1 is decided by its wavelength. Accordingly, considering a frequency of 1000 MHz as a reference, for example, the antenna element 1 is designed longer than the length of the antenna element corresponding to the reference frequency in case of radio wave 800 MHz which is lower than the reference frequency, and the antenna element 1 is designed shorter than the length of the antenna element corresponding to the reference frequency in case of radio wave 1200 MHz which is higher than the reference frequency.

Further, although the antenna element 1 illustrated the construction that is the shape of the L character type in Fig. 1, the shape of the antenna element 1 is not limited thereto in particular, and it may be a monopole type arranged like a straight line, for example. The antenna elements 1 may be an antenna of a whip antenna or a helical antenna as other form.

The printed wiring board 2 is a board on which a dispatch circuit which generates an electric signal and an electronic circuit are installed, and its GND pattern can function as an antenna element of a cold side. Assuming the printed wiring board 2 the antenna element of the cold side, with the antenna element 1, it will be in an approximately equivalent state that a dipole antenna including two antenna elements of a hot side and a cold side is formed.

The power feeding point 3 is a point to which AC power is supplied in the antenna element 1. The power feeding point 3 connects with the printed wiring board 2 electrically at one side and connects with the parallel resonance circuit 4 electrically on the other side. Thus, the power feeding point 3 has the construction that supplies alternating current to the antenna element 1 via the parallel resonance circuit 4.

The parallel resonance circuit 4 includes an inductor (coil) L1 and a capacitor (capacitor) C1 which are connected in parallel. The parallel resonance circuit 4 connects with the antenna element 1 electrically at one side and connects with the power feeding point 3 electrically on the other side.

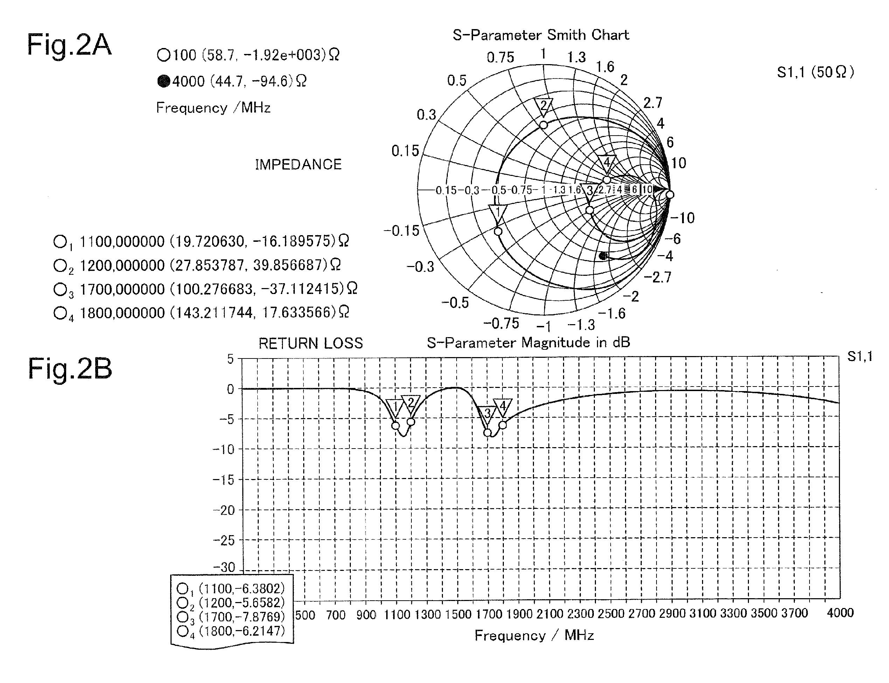

Next, a function of the antenna device 10 according to this exemplary embodiment will be described with reference to drawings. Fig. 2A and Fig. 2B show antenna characteristics of the antenna device 10 according to this exemplary embodiment.

Fig. 2A shows impedance characteristic of the antenna device 10 according to this exemplary embodiment. Here, impedance is one method to see behavior of an antenna in a high frequency, and is drawn on the Smith chart. Because the voltage standing wave ratio becomes so small that it is generally near 50Ω of a center of the Smith chart circle, characteristics as an antenna is good and matching with the circuit side also improves more. Fig. 2B shows return loss characteristic of the antenna device 10 according to this exemplary embodiment. In the figure, the more it is close to 50Ω, the more return loss shows a small value. As obvious from the figure, as for the antenna device 10 according to this exemplary embodiment, it is found that the characteristic and the matching characteristic of the antenna become good in the portion of a valley (that is, a band of 1100 MHz-1200 MHz and a band of 1700 MHz-1800 MHz).

As mentioned above, if return loss is not -5 dB or less, the securement of antenna characteristics is difficult. In the antenna device according to this exemplary embodiment, in a frequency band of 1100, 1200, 1700 and 1800 MHz which markers 1, 2, 3 and 4 indicate, the return loss of 1 -5 dB or less is obtained, and it is found that sufficient antenna characteristics are also obtained using the single antenna element 1.

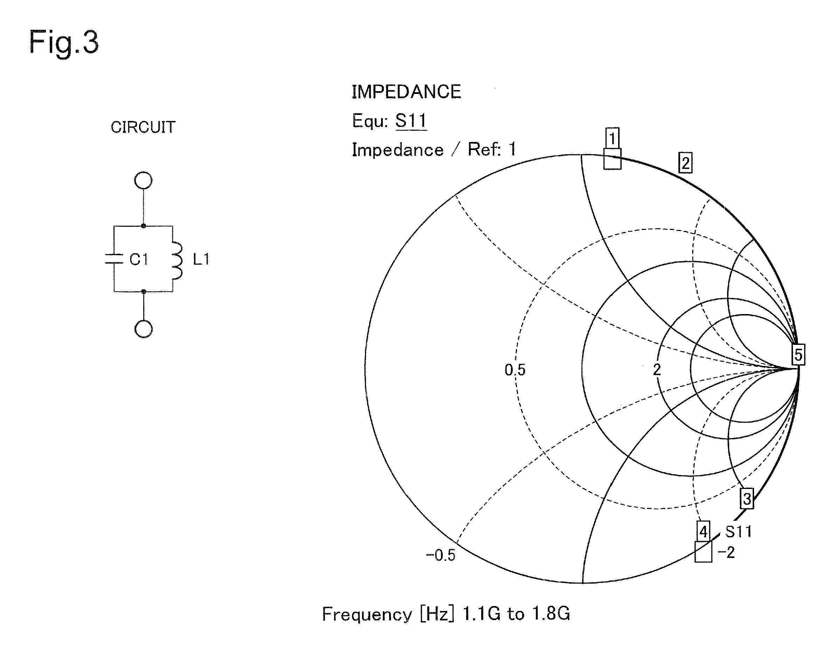

Fig. 3 shows the parallel resonance circuit 4 and its impedance characteristic according to this exemplary embodiment. Markers 1, 2, 3, 4 and 5 shown in Fig. 3 show impedance of the parallel resonance circuit 4 in frequency bands of 1100, 1200, 1700, 1800 and 1500 MHz, respectively.

The parallel resonance circuit 4 according to this exemplary embodiment operates as induction properties (as an inductor) in a frequency band f1 lower than a parallel resonating frequency f2 of illustrated 1500 MHz and operates as capacitance properties (as a capacitor) in a frequency band f3 higher than the parallel resonating frequency f2 of 1500 MHz. Thus, when the parallel resonance circuit 4 is connected in series with the antenna element 1 set up in this way and the power feeding point 3, impedance of induction properties is inserted in series in the low frequency band f1 of 1100 to 1200 MHz, and electrical length looks long. That is, it is synonymous with a coil having been inserted.

On the other hand, impedance of capacitance properties is inserted in series in a high frequency band f3 of 1700 to 1800 MHz, and electrical length looks short. That is, it is synonymous with a capacitor having been inserted. Here, the magnitude correlation between the low frequency band f1, the parallel resonating frequency f2 and the high frequency band f3 mentioned above will be f1<f2<f3 as mentioned above.

In this exemplary embodiment, though the antenna element 1 on the hot side is one, the same effect as resonance between two can be obtained by installing the parallel resonance circuit 4 including a coil L1 and a capacitor C1 between the antenna element 1 and the power feeding point. Specifically, resonance is obtained in the frequency band f1 of 1100 to 1200 MHz and in the frequency band 1700 to 1800 MHz which should correspond, and securement of the return loss is performed. Because impedance in 1500 MHz which is a parallel resonating frequency f2 of the resonant circuit 4 is infinity, the antenna device 10 will not have antenna characteristics which can function as an antenna in the parallel resonating frequency f2. When judged as the return loss of the antenna device 10 which Fig. 2B shows, the return loss in 1500 MHz is 0 dB certainly. When the above-mentioned point is considered, the present invention can be realized by making the antenna element 1 into the length between two frequency bands f1 and f3 so that the antenna element 1 may be made to correspond to both desired low frequency band f1 and high frequency band f3. That is, according to the desired frequency bands f1 and f3, the physical length of the antenna element 1 is set. For example, when making the antenna device 10 correspond to frequency bands f1 and f3 around 1200 MHz and around 1800 MHz, because the wavelength of the frequency of 1500 MHz which is an intermediate value of two frequency bands f1 and f3 is 0.2 m, the length of the antenna element 1 is determined based on the length of its wavelength. For example, the physical length of the antenna element 1 will be length 0.1 m which is obtained by multiplying radio wavelength 0.2 m of the above-mentioned frequency 1500 MHz by 1/2 in case of a dipole antenna. As other exemplary embodiments, for example, the length 0.05 m which is obtained by multiplying the above-mentioned wavelength 0.2 m by 1/4 can be made the length of the antenna element 1 in case of a vertical antenna.

Even if the antenna element 1 of an antenna device 10 is single in the present invention, the parallel resonance circuit 4 is placed between the antenna element 1 and the power feeding point 3 and the parallel resonating frequency f2 is set so that it will be between two different frequency bands. Moreover, the parallel resonance circuit according to the present invention indicates induction properties in the frequency band f1 lower than the parallel resonating frequency f2 and indicates capacitance properties in the frequency band f3 higher than the parallel resonating frequency f2 and can perform wireless communication in both bands of the low *frequency band f1 and the high frequency band f3 by designing as a return loss in each low frequency band f1 and high frequency band f3 will be -5 dB or less. As a result, the antenna device 10 can be miniaturized, maintaining functionality and cost reduction can be obtained.

Thereby, in both of the frequency band f1 lower than the parallel resonating frequency f2 of the parallel resonance circuit 4 and the frequency band f3 higher than the parallel resonating frequency f2, wireless communication can be performed only by using a single hot side antenna element 1 in the antenna device 10 according to the present invention.

When the length of the antenna element 1 is selected optionally, the antenna device 10 can be made correspond to desired different frequency bands.

### <Second E.mbodiment>

Next, a second exemplary embodiment of the present invention will be described. The second exemplary embodiment of the present invention is a modification of the first exemplary embodiment mentioned above. Hereinafter, in this exemplary embodiment, identical codes are attached to parts having the same functions as the parts which have been already described in the first exemplary embodiment, and descriptions thereof are omitted.

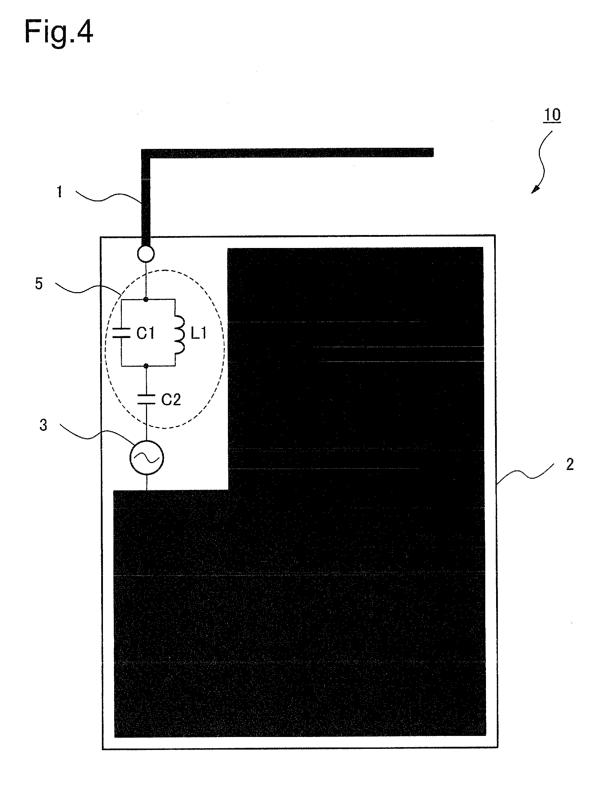

Fig. 4 is a top view for explaining an antenna device 10 according to the second exemplary embodiment of the present invention. In this exemplary embodiment, a capacitor C2 is further installed in series to the parallel resonance circuit which installed the coil L1 and the capacitor C1 in parallel between the circuit thereof and the power feeding point 3, and a series parallel resonance circuit 5 is composed of the coil L1, the capacitor C1 and the capacitor C2. Further, as other exemplary embodiment, the series parallel resonance circuit 5 may be composed by adding a coil L2 (not shown) to the parallel resonance circuit in series instead of the capacitor C2.

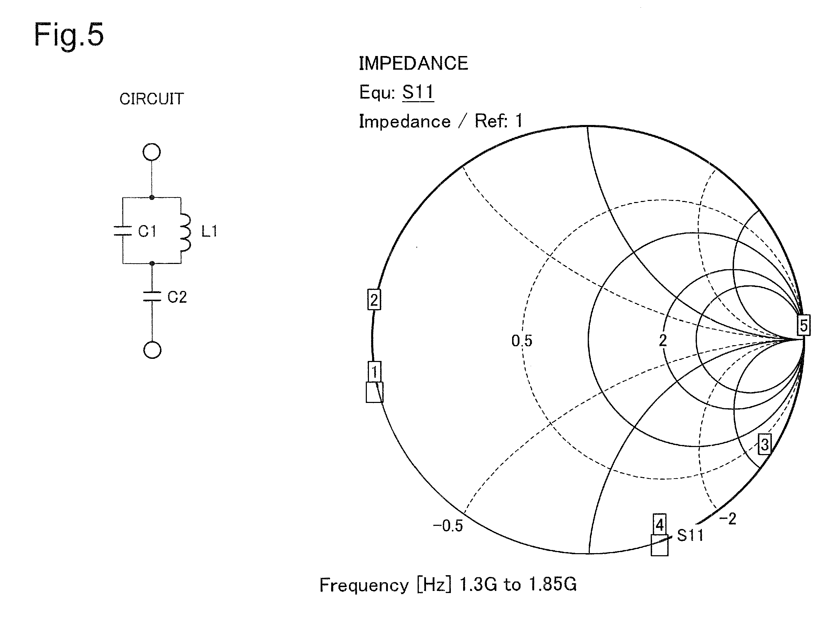

The series parallel resonant circuit 5 provided in the antenna device 10 according to the second exemplary embodiment and its impedance are shown in Fig. 5. In this antenna device 10, parallel resonance is obtained by the parallel resonance circuit including the capacitor C1 and the coil L1, and series resonance is obtained by the parallel resonance circuit and the capacitor C2. Unlike the first exemplary embodiment, it is constituted in the low frequency band f1 (markers 1 and 2) of 1300 to 1400 MHz which should correspond so as to make a short (through), and in the high frequency band f3 (markers 3 and 4) of 1750 to 1850 MHz so as to indicate capacitance properties. That is, by the series parallel resonance circuit 5, the low frequency band f1 of 1300 to 1400 MHz is as it is, it is shortened in the high frequency band f3 of 1750 to 1850 MHz so as to indicate capacitance properties.

Further, when adding a coil L2 (not shown) to the parallel resonance circuit in series instead of the capacitor C2 as other exemplary embodiment, it becomes inductive in the low frequency f1 of 1300 to 1400 MHz which should correspond, and it becomes a short (through) in the high frequency band f3 of 1750 to 1850 MHz. That is, by the series parallel resonance circuit 5 constituted in this way, the low frequency band f1 of 1300 to 1400 MHz is shortened by inductivity, and the high frequency band f3 of 1750 to 1850 MHz is made as it is.

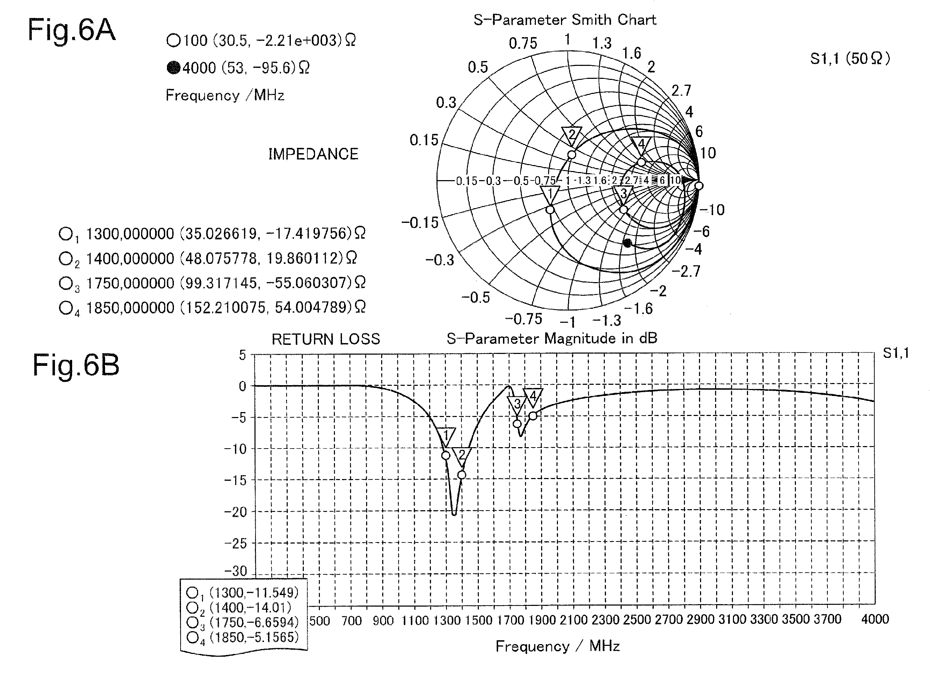

Antenna characteristics of the antenna device 10 using the series parallel resonance circuit 5 according to the second exemplary embodiment is shown in Fig. 6A and Fig. 6B. As it is clear from Fig. 6A and Fig. 6B, return loss of -5 dB or less is securable in the low frequency band f1 of 1300 to 1400 MHz, and the high frequency band of 1750 to 1850 MHz.

This exemplary embodiment can correspond to an antenna specification of each customer. Specifically, for example, it can be used for the case when the request to the antenna characteristic in the low frequency band f1 of 1300 to 1400 MHz is severe and the request to the antenna characteristic in the high frequency band f3 of 1750 to 1850 MHz is permitted comparatively. Impedance control by this series parallel resonance circuit 5 can secure return loss of -5 dB or less to some extent.

Although it is possible to attach a very big coil on a very short antenna element and to compose the antenna device 10 from a viewpoint of maintaining the characteristic of the antenna itself, there is a limit in the size of the member thereof and it takes fixed restriction. It is desirable to use the antenna device 10 provided with the series parallel resonance circuit 5 within a realizable limit in the frequency band in which some degradation is permitted while setting a frequency band with a severe characteristic request as a short so that the characteristic thereof is not degraded if possible.

Thus, according to the second exemplary embodiment, even when the antenna specifications of the antenna device 10 differ for the sake of a frequency band, or a customer's convenience, the antenna device 10 which can demonstrate the antenna characteristic corresponding to the situation and environment can be provided.

Moreover, the antenna device can be provided with a series parallel resonance circuit including plural capacitors or coils in series with the parallel resonance circuit within a limit which can maintain the antenna characteristic.

Further, a design method of an antenna device using the separate feature included in the first and the second exemplary embodiment mentioned above is also included in the category of the present invention.

Moreover, an electrical apparatus into which the antenna device 10 which is included in the first and second exemplary embodiments mentioned above is loaded is also included in the category of the present invention.

The present invention can be put into effect by other various forms without deviating from the purpose or the main feature thereof.

Therefore, it is only just illustration by all points, and the above-mentioned exemplary embodiment should not be interpreted in a limited way. The scope of the present invention is indicated by the range of the patent claim paragraph, and is not bound to a specification body at all. All transformations, various improvement, substitution and reforming belonging to the equal range of the range of patent claim paragraph are within the scope of the present invention.

This application insists on priority based on Japanese Patent Application No. 2010-236601 applied on October 21, 2010 and takes everything of the disclosure here.

Although it can also be described of a part or all of the above -mentioned embodiments also like the following notes, they are not restricted to henceforth.
(Note 1)
   An antenna device including a single antenna element corresponding to a first frequency band and a second frequency band different from the first frequency band;
   a power feeding point for supplying alternating-current power to the antenna element; and
   a parallel resonance circuit connected electrically between the antenna element and the power feeding point, wherein the parallel resonance circuit has impedance that is set so as to indicate induction properties in the first frequency band, and so as to indicate capacitance properties in the second frequency band, and return loss is so small that wireless communication can be performed in the first and second frequency bands.
(Note 2)
   The antenna device according to note 1, wherein the parallel resonance circuit has a parallel resonance frequency in between the first and the second frequency band.
(Note 3)
   The antenna device according to note 1 or note 2, wherein return loss in the first and second frequency bands is -5 dB or less.
(Note 4)
   The antenna device according to any one of notes 1 to 3, wherein full length of the antenna element is set, based on an intermediate value of the first frequency band and the second frequency band, to a length of approximate 1/4 or approximate 1/2 of a wavelength of the intermediate value thereof.
(Note 5)
   The antenna device according to any one of notes 1 to 4 further including a printed wiring board which functions as an antenna element of a dipole antenna connected electrically to the power feeding point.
(Note 6)
   The antenna device according to any one of notes 1 to 5 further including one or more capacitive elements or inductive elements connected electrically to the parallel resonance circuit in series.
(Note 7)
   An electrical apparatus including the antenna device according to any one of notes 1 to 6.
(Note 8)
   An antenna device design method including: selecting a single antenna element corresponding to a first frequency band and a second frequency band different from the first frequency band; connecting a parallel resonance circuit electrically between the antenna element and a power feeding point for supplying alternating-current power to the antenna element; setting impedance of the parallel resonance circuit so as to indicate induction properties in the first frequency band, and so as to indicate capacitance properties in the second frequency band; and setting return loss in the first and second frequency bands to a range so as to enable wireless communication.
(Note 9)
   The antenna device design method according to note 8, wherein the parallel resonance circuit has a parallel resonance frequency in between the first and the second frequency band.
(Note 10)
   The antenna device design method according to note 8 or note 9, wherein return loss in the first and second frequency bands is -5 dB or less..
(Note 11)
   The antenna device design method according to notes 8 to 10, wherein full length of the antenna element is set, based on an intermediate value of the first frequency band and the second frequency band, to a length of approximate 1/4 or approximate 1/2 of a wavelength of the intermediate value thereof.

### [Reference Signs List]

- 1: antenna element.
- 2: printed wiring board.
- 3: power feeding point.
- 4: parallel resonance circuit.
- 5: series parallel resonant circuit.
- 10: antenna device.

## Claims

1. An antenna device comprising:
a single antenna element; corresponding to a first usage frequency band and a second usage frequency band different from the first usage frequency band;
a power feed point; for supplying alternating current power to the antenna element; and
a parallel resonance circuit connected electrically between the antenna element and the power feed point, wherein
the parallel resonance circuit has impedance that is set so as to indicate induction properties in the first usage frequency band, and so as to indicate capacitance properties in the second usage frequency band, and return loss is sufficiently small in the first and second usage frequency bands to enable wireless communication.

2. The antenna device according to claim 1, wherein the parallel resonance circuit has a parallel resonance frequency between the first usage frequency band and the second usage frequency band.

3. The antenna device according to claims 1 or 2, wherein return loss in the first and second usage frequency bands is -5 dB or less.

4. The antenna device according to any one of claims 1 to 3, wherein full length of the antenna element is set, based on an intermediate value of the first usage frequency band and the second usage frequency band, to a length of approximate 1/4 of a wavelength of the intermediate value thereof.

5. The antenna device according to any one of claims 1 to 4 further comprising a printed wiring board which functions as an antenna element of a dipole antenna connected electrically to the power feed point.

6. The antenna device according to any one of claims 1 to 5 further comprising at least one or more capacitive elements or inductive elements connected electrically to the parallel resonance circuit in series.

7. An electrical appliance comprising the antenna device according to any one of claims 1 to 6.

8. An antenna device design method comprising steps of:
a step of selecting a single antenna element corresponding to a first usage frequency band and a second usage frequency band different from the first usage frequency band;
a step of connecting a parallel resonance circuit electrically between the antenna element and a power feed point for supplying alternating current power to the antenna element;
a step of setting impedance of the parallel resonance circuit so as to indicate induction properties in the first usage frequency band, and so as to indicate capacitance properties in the second usage frequency band; and
a step of setting return loss in the first and second usage frequency bands a range so as to enable wireless communication.

9. The antenna device design method according to claim 8, wherein the parallel resonance circuit has a parallel resonance frequency between the first usage frequency band and the second usage frequency band.

10. The antenna device design method according to claims 8 or 9,
wherein
return loss in the first and the second usage frequency bands is -5 dB or less.
